# EUROPEAN PATENT APPLICATION

(11) **EP 2 600 584 A1**
(43) Date of publication of application: **05.06.2013**
(21) Application number: 11191417.2
(22) Date of filing: 30.11.2011
(51) Int. Cl.: H04L 29/06, H04L 29/12, H04W 52/02

(54) **Adaptive power management for multimedia streaming**

(71) Applicant: Research In Motion Limited, Waterloo, ON N2L 3W8 (CA)
(72) Inventor: Sanchez, Jose E., Sunrise, FL Florida 33323 (US); Hsiao, Jerry, Sunrise, FL Florida 33323 (US)
(74) Representative: Greenaway, Martin William

(57) **Abstract**

What is disclosed is a method and system for determining whether to continue or halt the transmission of a keep-alive message to a streaming media provider (102) when a streaming session is paused (FIG. 3, FIG. 6). At least one characteristic (FIG. 5, FIG. 6) of a wireless device (110) streaming media data (112) playback from a streaming media provider (102) is monitored. A determination (FIG. 3, FIG. 6) is made whether the playing of the media data from a streaming media provider (102) has been paused. Based on the characteristic (FIG. 5, FIG. 6) and the playing of the media data from a streaming media provider (102) being paused a transmission of a keep-alive message to the streaming media provider (102) is halted. Media characteristics and operating characteristics are used in the determination of whether a keep-alive message is continued to be transmitted.

## Description

### FIELD OF THE DISCLOSURE

The present disclosure generally relates to streaming of multimedia data on a wireless device, and more particularly relates to power management during playback of streaming multimedia data.

### BACKGROUND

Various advances in computer networking technologies along with more powerful processors has made streaming multimedia data on electronic and mobile devices possible. Today, streaming multimedia data is common in both wired and wireless end-user devices.

The life of a battery is a challenge with mobile devices. This challenge is especially difficult when wirelessly streaming audio and video. Oftentimes, users of wireless devices pause the playing of the multimedia content while performing other tasks, such as, texting or speaking on the telephone. However, paused streaming video continues to consume power, even though the user may perceive the media player to be inactive.

### BRIEF DESCRIPTION OF THE DRAWINGS

The accompanying figures where like reference numerals refer to identical or functionally similar elements throughout the separate views, and which together with the detailed description below are incorporated in and form part of the specification, serve to further illustrate various embodiments and to explain various principles and advantages, all in accordance with the present disclosure in which:

FIG. 1 is a diagram of an example wireless device communicating with a streaming server for rendering streaming media;

FIG. 2 is an example of a graph illustrating current consumption over time for a wireless device during an idled or paused state of a streaming multimedia playback;

FIG. 3 is an example block diagram of a supervised learning algorithm used either to continue or to halt the transmission of a keep alive message to a streaming media provider when a streaming session is paused or halted;

FIG. 4 is an example of notification to a user for gathering user override(s) for the supervised learning algorithm of FIG. 3;

FIGS. 5A and 5B is an example of a table of characteristics being monitored during streaming data, in accordance with one example of the present disclosure;

FIG. 6 is a flow diagram used either to continue or to halt the transmission of a keep alive message to a streaming media provider when a streaming session is paused or halted, according to one example of the present disclosure; and

FIG. 7 is a block diagram of a wireless device of FIG. 1 and associated components in which the systems and methods disclosed herein may be implemented.

### DETAILED DESCRIPTION

As required, detailed embodiments are disclosed herein; however, it is to be understood that the disclosed embodiments are merely examples and that the systems and methods described below can be embodied in various forms. Therefore, specific structural and functional details disclosed herein are not to be interpreted as limiting, but merely as a basis for the claims and as a representative basis for teaching one skilled in the art to variously employ the disclosed subject matter in virtually any appropriately detailed structure and function. Further, the terms and phrases used herein are not intended to be limiting, but rather, to provide an understandable description.

The terms "a" or "an", as used herein, are defined as one or more than one. The term plurality, as used herein, is defined as two or more than two. The term another, as used herein, is defined as at least a second or more. The terms "including" and "having" as used herein, are defined as comprising (i.e., open language). The term "coupled" as used herein, is defined as "connected" although not necessarily directly, and not necessarily mechanically.

The term "mobile device" or "wireless device" or "wireless communication device" is intended to broadly cover many different types of devices that can wirelessly receive signals, and in most cases can wirelessly transmit signals. For example, and not for any limitation, a wireless communication device can include any one or a combination of the following: a two-way radio, a cellular telephone, a mobile phone, a smartphone, a two-way pager, a wireless messaging device, a laptop computer, a personal digital assistant, a tablet computing device, and other similar devices.

Streaming media is multimedia that is continuously received by and presented to an end-user while being delivered by a streaming provider. Examples of streaming media include internet television and internet radio. The term "streaming media" is commonly used to refer to the delivery method of the medium rather than to the medium itself. For example, non-streaming media include books, video cassettes, audio CDs, and video DVDs.

Real Time Streaming Protocol (RTSP) is a network control protocol designed for use in entertainment and communications systems to control streaming media servers. The protocol is used for establishing and controlling media sessions between end points. Clients of media servers issue VCR-like commands, such as play and pause, to facilitate real-time control of playback of media files from the server. RTSP was developed by the Multiparty Multimedia Session Control Working Group (MMUSIC WG) of the Internet Engineering Task Force (IETF) and published as RFC 2326 in 1998, the teachings of which are hereby incorporated by reference in their entirety.

The phrase "monitoring a characteristic of a wireless device streaming media data" refers to two distinct sources of characteristics - "media characteristics" and "device characteristics". The media characteristic includes metadata associated with the streaming media data itself. For example, media characteristics include the type or category of the streaming media data as well as the genre of the multimedia stream, or a combination thereof. The second source characteristic is the device characteristics of the wireless device itself during playback of the streaming media. For example, the device characteristics include the time of day when the multimedia stream is being streamed, audio volume of the multimedia being streamed, whether the wireless device is in a holster, whether or not texting or voice calls have been performed during streaming media data, the orientation of the device, e.g., face up or face down, geographic location of the wireless device, or a combination thereof, etc. The following examples describe using two distinct characteristics - media characteristics, device characteristics, or a combination thereof. More specifically, the characteristics are used to determine to either continue or halt the transmission of a keep alive message to a streaming media provider when a streaming session is paused. Moreover, in another example, current characteristics as well as historic characteristics are used in the determination of whether a keep alive message is continued to be transmitted.

A wireless device, such as a mobile device, consumes power during streaming of multimedia content even when the playing of the content is temporarily or for a longer period of time. This power consumption occurs after a multimedia streamed to the wireless device, for example a video, has been paused and the wireless device has gone to the idle/standby state. The power is required to transmit a streaming media keep-alive message. This message is part of a RTSP. The purpose of this keep-alive message is to notify a RTSP server that the client session, such as on a wireless device, is still alive. This periodic transmission of the keep-alive message consumes power and reduces battery life.

Multimedia playback fails if the streaming keep-alive message is stopped because the streaming media session will terminate. Stated differently, when a user tries to resume playback or rendering of the streaming media data after the media session terminates, the playing will fail. The user is forced to establish a new streaming playback session. In turn, the user is forced to either review the streaming session from the beginning, or if possible, advance the playing position to a desired location.

Described below are systems, computer program product, and methods for determining either to continue or halt the transmission of a keep alive message to a streaming media provider when a streaming session is paused. The determination to either continue or halt the transmission of a keep alive message balances the convenience to a user to resume a paused streaming against increased battery life.

A wireless link is established between a wireless device and a streaming multimedia provider such as an Internet website. A characteristic of a streaming media file playback is monitored, such as, whether the playing is paused. Other characteristics monitored may include the length of the streaming media file being played back, and a starting point and an ending point of the media file. A volume setting on the wireless device may also be monitored. Other events occurring on the wireless device may also be monitored, such as a voice call in progress. All these monitored characteristics are used to determine to either continue or halt the transmission of a keep alive message to a streaming media provider when a streaming session is paused.

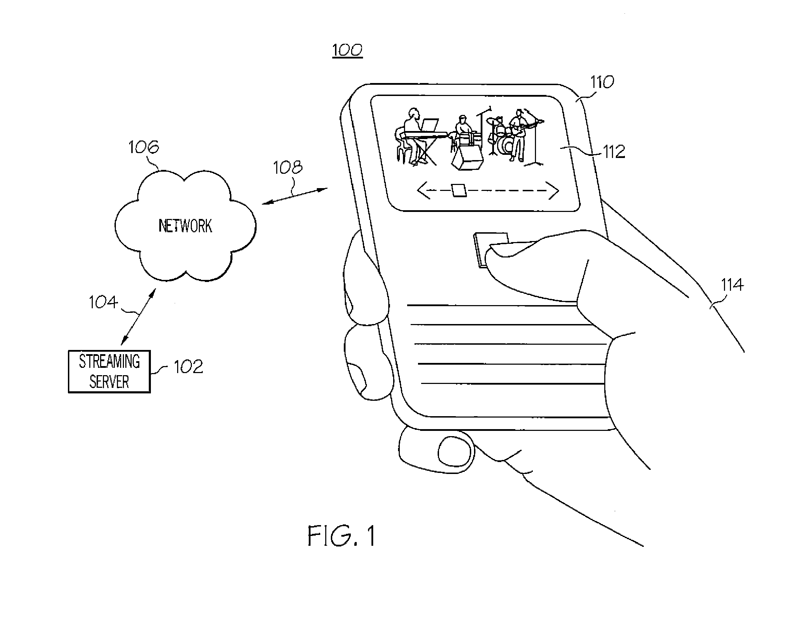

FIG. 1 is a diagram 100 of an exemplary wireless device 110 communicating with a streaming server 102 for rendering streaming media data 112. The streaming server communicates over free space 104, 108 with a wireless network 106 such as a Local Area Network ("LAN"), Wide Area Network ("WAN"), or another network configuration. The network 106 can be dedicated to data or a combination of voice and data. A user 114 controls the streaming media data 112 playback on wireless device 110, such as video, audio, text, or a combination thereof.

While a wireless device 110 is illustrated in FIG. 1 as a smart phone, other examples of wireless devices which may be used in accordance with the principles of the present disclosure include, but are not limited to, cellular, radio, or other wireless phones; music players; game devices; handheld computers; ebook readers; portable computers; laptop computers; personal data assistants (PDAs); or any other portable device having wireless communication capabilities.

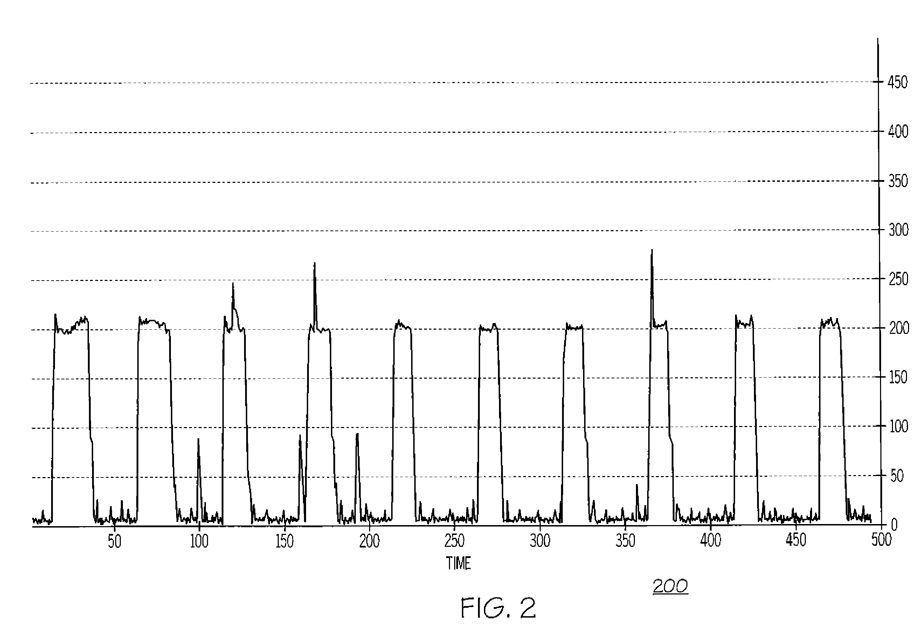

Turning now to FIG. 2, shown is a graph 200 illustrating a current measurement over time during a paused or idle state of a streaming multimedia playback. Approximately every 50 seconds, while the playing of the streaming multimedia data is paused, a keep-alive message is sent to the streaming multimedia server to indicate the session is still present. The transmission of this packet results in a current drain of approximately 200ma. This current drain occurs during the time the radio transceiver is actively communicating with the network to transmit the streaming keep-alive message. Although the actual streaming keep-alive pack is only a few seconds, the radio transceiver stays on for a period of time while waiting for the wireless telecommunications network to return the wireless device to an idle state. This additional transceiver "on" time, in turn, further reduces the battery life.

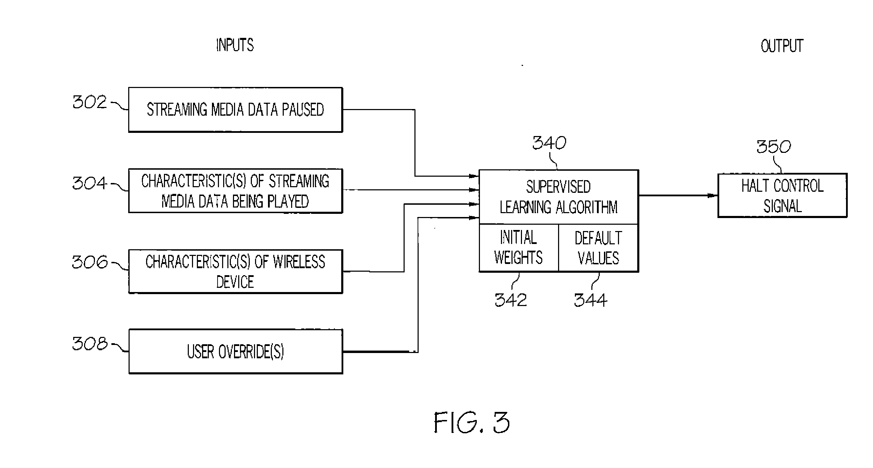

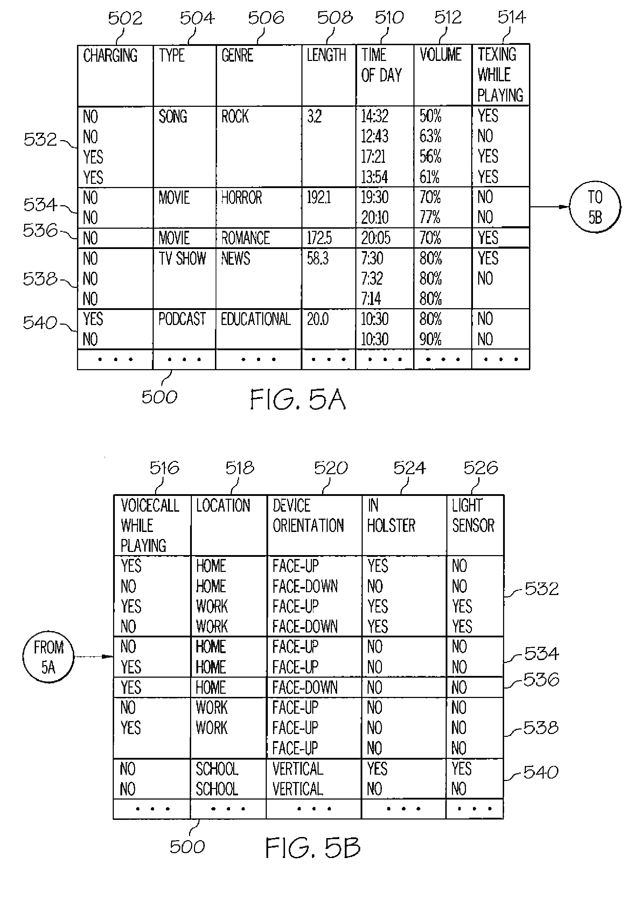

FIG. 3 is an example block diagram of a supervised learning algorithm used either to continue or to halt the transmission of a keep-alive message to a streaming media provider 102 when a streaming session is paused. Inputs to the supervised learning algorithm include, whether the streaming media data 112 is paused 302. The paused state of a streaming session may act as a trigger for the supervised learning algorithm 340 to begin "inferring a function" or "learning" from the other data inputs. These other inputs include characteristics of the streaming media 304, characteristics of the wireless device 306, and user override(s) 308. An overview of the two sources of characteristics, media characteristics and device characteristics, is described above and further examples are shown below with reference to tables in FIG. 5. The user override(s) 308 are selections from users on whether to save battery life by halting the transmission of the keep-alive message when the streaming session is paused. The learning algorithm 340 issues a halt control signal 350 in response to a combination of inputs 302, 304, 306, and 308. However, this halt control signal 350, in one example, is subject to review and override by the user.

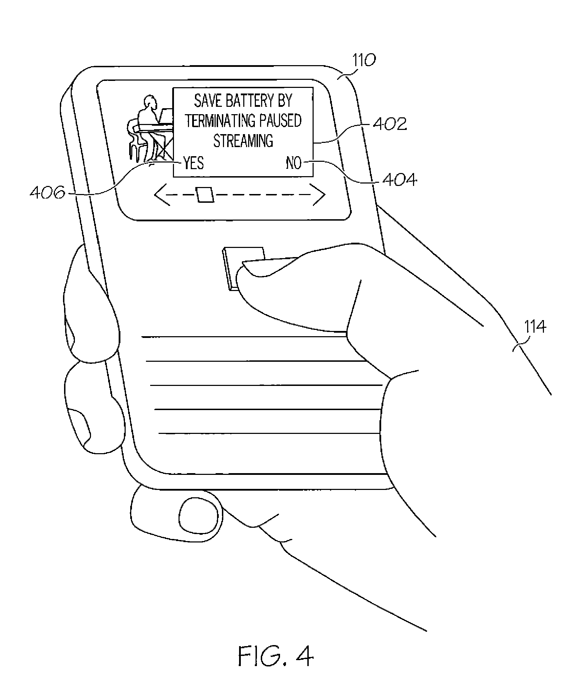

Shown in FIG. 4 is an example of a notification message 402 to a user for gathering user override(s) 308 as supervised input to the supervised learning algorithm 340. In this example, the user may select "YES" 406 or "NO" 404 as part of the notification message 402. A user response timer (not shown) acting as a watch dog timer may be used in conjunction with the notification message 402. The user response timer would ensure the halting of the transmission of the keep-alive message to a streaming media provider 102 when a streaming session is paused in situations in which the user fails to respond to the message or ignores a message, such as, when the wireless device is face down or in the holster.

The supervised learning algorithm 340 "infers a function" or "learns" from the inputs of user override(s) 308, initial weights, and default settings. Examples of the supervised learning algorithm 340 include Support Vector Machines, linear regression, logistic regression, naive Bayes, linear discriminate analysis, decision trees, k-nearest neighbor algorithm, and Neural Networks (Multilayer perception), or a combination thereof. Updates to the initial weights, default settings, and the learning algorithm can be provided through software updates and patches from, for example, the provider of the wireless device.

Turning now to FIG. 5, examples of media characteristics and operating characteristics are shown in table 500. These characteristics are used in the determination of whether to continue or halt the transmission of a keep-alive message to a streaming media provider 102 when a streaming session is paused.

Column 502 includes a first device characteristic, which is whether the wireless device 110 is charging 502 by being coupled to a power charger. Typically, it is not necessary to try to save battery power when the wireless device 110 is charging. Rather when the wireless device 110 is charging, the keep-alive message continues to be transmitted to the streaming media provider 102 when a streaming session is paused. In this charging example, battery life is not an important consideration.

Next, a type 504 of streaming media data 112 playback is recorded. Shown are several media characteristics including "song", "movie", "TV show", and "podcast". Next is the genre 506 of streaming media data 112 playback. Shown are "rock", "horror", "romance", "news", and "educational". Next, the length 508 of the streaming media data 112 playback is shown in 506 along with time of day 510 it was last played or rendered. Alternatively, in another example, pairs of start and stop time may be used. Note that multiple entries indicate that the streaming media data 112 has been played more than once. These multiple entries are historic characteristics of the time of day streaming media was played. Likewise, a historic volume characteristic 512 of streaming media data 112 playback is shown. Next, a series of entries representing device characteristics include texting while playing 514, voice call while playing 516, location 518, device orientation 520 of the wireless device 110, is the wireless device 110 in-holster 524, and does a light sensor 526 of the wireless device 110 sense a dark environment. These media and device characteristics are of the previous rendering of the streaming media data 112 playback. It should be understood that these entries are examples only and other current and historical characteristics are possible in further examples.

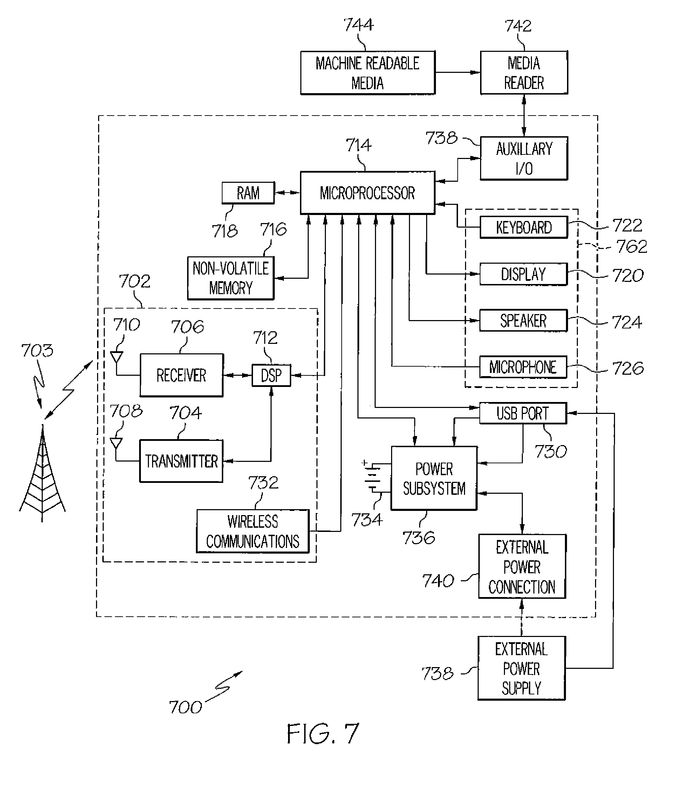

The example historical media and device characteristics shown in FIG. 5 can be measured using a combination of hardware and software and/or auxiliary I/O components coupled to the wireless device 110. This hardware and software is further described in FIG. 7. GPS information can be used to determine the geographic location of the wireless device 110. An accelerometer, in one example, may be used to determine the relative orientation of the wireless device 110, such as, holding the screen in a landscape or portrait mode. A light sensor is used to determine if the wireless device 110 is being operated in a dark environment. A sensor, such as a magnetic switch, Near Field Communications or Zigbee® may be used to determine if the wireless device is in the holster.

Next, other characteristics of device streaming media playback 112 are described. For example, a rock song in row 532, column 506, while paused is obviously background music because the volume 512 is low, the user has allowed texting column 514 and voice calls column 516 in all locations column 518 and the orientation 520 of the device is unimportant. Further, the status of whether the device is in holster column 524 or in the light sensor column 526 is unimportant. Therefore, if this song is paused, the transmission of a keep-alive message is halted. In turn, the battery life is improved because the keep-alive message is no longer transmitted. In this example, the power pack life for other activities such as voice and texting is more important than pausing and resuming the streaming session for background music.

Continuing further, in row 534, the user is viewing a horror movie at home and historically, does not text, keeps the device face-up and out of the holster. In this situation, the user is giving move importance to the movie and if the movie is paused, the wireless device 110 continues the transmission of a keep-alive message 200. The movie, not the power drain on the battery or power pack, is more important in this example.

Continuing still further, in row 538 television news program is shown at work, with the device orientation is always face-up, out of the holster, in day light, texting, and voice calls have been allowed. Even though in this example texting or voice calls has been allowed, this is an office environment and these take priority. The user is giving move importance to the news over battery life. When the streaming media is paused, the wireless device 110 continues the transmission of a keep-alive message 200.

Continuing further, row 540 is an educational podcast being played at school, no other distractions have been allowed. Therefore, in this situation, the user is giving move importance to the podcast and if the podcast is paused, the wireless device 110 continues the transmission of a keep-alive message 200. The podcast, not the power pack life, is more important.

Other variations can be inferred from the historical characteristics on the relative importance to a user of the use of battery life versus streaming media playback being resumed. For example, a weighting table, such as Table I, can be used with each of the characteristics described above in FIG. 5. This weighting table can be used in place of or in conjunction with the learning algorithm 340. Table I lists a series of characteristics down the left-hand side of the table and a corresponding weighting factor in the right-hand side. In this example, each characteristic that is determined or monitored, i.e. the media characteristics and the device characteristics, is added together and an average compared to a pre-determined settable threshold. In this example, assume the settable threshold is 5 and any average value of weighting factors above 5 halts the transmission of a keep-alive message to a streaming media provider 102. The first row of Table I is "Charging=Yes" and if this characteristic is met, the weighting factor is set to a negative 100 so that the addition of any other weighting factor will not halt the keep-alive message transmitted to the streaming media provider 102. In another example, using Table I, when the characteristics of the device are "Charging = NO", "Work Hours=NO", "VOLUME ≤ 50%", the corresponding weighting factors from Table 1 are 5, 6, 8, respectively. If the media characteristics are "TYPE=SONG", "CALL ACCEPTED WHILE PLAYING=YES", the corresponding weighting factors from Table I are 5, 8, respectively. The average weighting factor is 5+7+8+5+8 divided by 5 equals = 9. Any average weighting factor above 5 halts the keep-alive message transmitted to the streaming media provider 102. Therefore in this example, the wireless device 110 halts the keep-alive message transmitted to the streaming media provider 102 in order to save battery life.

**TABLE I**

| **CHARACTERISTICS** | **WEIGHTING FACTOR** |
|---|---|
| CHARGING = YES | -100 |
| CHARGING = NO | 5 |
| TYPE = SONG | 5 |
| TYPE = MOVIE | 7 |
| TYPE = TV SHOW | 5 |
| TYPE = POD CAST | 5 |
| GENRE = ROCK | 5 |
| GENRE = HORROR | 2 |
| GENRE = ROMANCE | 6 |
| GENRE = NEWS | 6 |
| GENRE = EDUCATION | 5 |
| LENGTH ≤ 10 MINUTES | 6 |
| LENGTH > 10 MINUTES | 4 |
| WORK HOURS = YES | 4 |
| WORK HOURS = NO | 7 |
| FACE-UP = YES | 5 |
| FACE UP = NO | 8 |
| VOLUME ≤ 50% | 8 |
| VOLUME > 50% | 4 |
| VOLUME > 80% | 2 |
| IN-HOLSTER = YES | 8 |
| IN-HOLSTER = NO | 4 |
| LIGHT SENSED = YES | 4 |
| LIGHT SENSED = NO | 2 |
| TEXT ACCEPTED WHILE PLAYING = YES | 6 |
| CALL ACCEPTED WHILE PLAYING= YES | 8 |
| ... | ... |

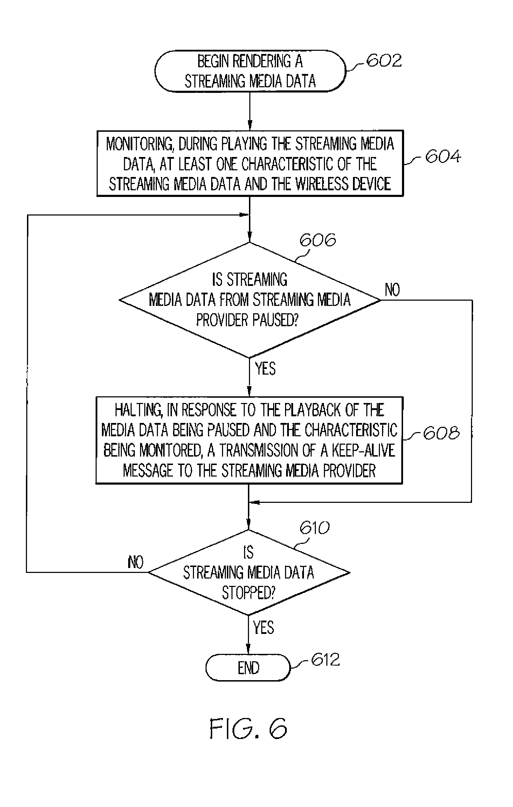

Referring now to FIGs. 6 and 7, the flowcharts and block diagrams in these figures illustrate the architecture, functionality, and operation of possible implementations of systems, methods, and computer program products according to various examples discussed. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

FIG. 6 is a flow diagram for the determination of whether to continue or halt the transmission of a keep-alive message to a streaming media provider 102 when a streaming session is paused. The process begins in step 602 when the streaming media data 112 is presented on the wireless device 110 from the streaming media provider 102. Step 604, one or more characteristics, including media and/or device characteristics, are monitored. The media and device characteristics are stored, such as table 500 of FIG. 5 on wireless device 110, in non-volatile memory. A test, in step 606, is made if the streaming media data 112 from streaming media data 102 is paused. In the case where the streaming media data 112 is not paused, the process continues to step 610. In the case where the streaming media data 112 is paused, the process continues to step 608 and depending on the characteristics being monitored in step 604, the transmission of a keep-alive message 200 to a streaming media provider 102 is halted and the process continues to step 610. In step 610, if the streaming media is stopped, the process flow ends in step 612. Otherwise, in step 610, if the streaming media data 112 is not stopped because of the characteristics being monitored, the streaming media is not paused in step 606, or a combination thereof, and the process iterates back up to step 606 as shown.

FIG. 7 is a block diagram of a wireless device 700 and associated components in which the systems and methods disclosed herein may be implemented. In this example, the wireless device 700 is a wireless two-way communication device with voice and data communication capabilities. Such wireless devices communicate with a wireless voice or data network 703 using a suitable wireless communications protocol. Wireless voice communications are performed using either an analog or digital wireless communication channel. Data communications allow the wireless device 700 to communicate with other computer systems via the Internet. Examples of wireless devices that are able to incorporate the above described systems and methods include, for example, a data messaging device, a two-way pager, a cellular telephone with data messaging capabilities, a wireless Internet appliance or a data communication device that may or may not include telephony capabilities.

The illustrated wireless device 700 is an example wireless device that includes two-way wireless communications functions. Such wireless devices incorporate a communication subsystem 702 comprising elements such as a wireless transmitter 704, a wireless receiver 706, and associated components such as one or more antenna elements 708 and 710. A digital signal processor (DSP) 712 performs processing to extract data from received wireless signals and to generate signals to be transmitted. The particular design of the communication subsystem 702 is dependent upon the communication network and associated wireless communications protocols with which the device is intended to operate.

The wireless device 700 includes a microprocessor 714 that controls the overall operation of the wireless device 700. The microprocessor 714 interacts with the above described communications subsystem elements and also interacts with other device subsystems such as non-volatile memory 716, random access memory (RAM) 718, user interfaces 762, such as a display 720, a keyboard 722, a speaker 724, and a microphone 726, auxiliary input/output (I/O) device 738, Universal Serial Bus (USB) Port 730, short and long range communication subsystems, a power subsystem and any other device subsystems.

A battery 734 or other power pack such as fuel cell, or solar cell or combination thereof is connected to a power subsystem 736 to provide power to the circuits of the wireless device 700. The power subsystem 736 includes power distribution circuitry for providing power to the wireless device 700 and also contains battery charging circuitry to manage recharging the battery 734. The external power supply 738 is able to be connected to an external power connection 740 or through a USB port 730.

The USB port 730 further provides data communication between the wireless device 700 and one or more external devices, such as an information processing system. Data communication through USB port 730 enables a user to set preferences through the external device or through a software application and extends the capabilities of the device by enabling information or software exchange through direct connections between the wireless device 700 and external data sources rather than via a wireless data communication network. In addition to data communication, the USB port 730 provides power to the power subsystem 736 to charge the battery 734 or to supply power to the electronic circuits, such as microprocessor 714, of the wireless device 700.

Operating system software used by the microprocessor 714 is stored in non-volatile memory 716. Further examples are able to use a battery backed-up RAM or other non-volatile storage data elements to store operating systems, other executable programs, or any combination of the above. The operating system software, device application software, or parts thereof, are able to be temporarily loaded into volatile data storage such as RAM 718. Data received via wireless communication signals or through wired communications are also able to be stored to RAM 718.

The microprocessor 714, in addition to its operating system functions, is able to execute software applications on the wireless device 700 and issues one or more control signals to components of the wireless device 700. A predetermined set of applications that control basic device operations, including at least data and voice communication applications, is able to be installed on the wireless device 700 during manufacture. Examples of applications that are able to be loaded onto the device may be a personal information manager (PIM) application having the ability to organize and manage data items relating to the device user, such as, but not limited to, e-mail, calendar events, voice mails, appointments, and task items. Another example is a streaming media power manager application which determines either to continue or halt the transmission of a keep alive message balancing the convenience to a user to resume a paused streaming with greater battery life.

Further applications may also be loaded onto the wireless device 700 through, for example, a wireless network 703, an auxiliary I/O device 738, USB port 730, communication subsystem 702, or any combination of these interfaces. Such applications are then able to be installed by a user in the RAM 718 or a non-volatile store for execution by the microprocessor 714.

In a data communication mode, a received signal such as a text message or web page download is processed by the communication subsystem, including wireless receiver 706 and wireless transmitter 704, and communicated data is provided the microprocessor 714, which is able to further process the received data for output to the display 720, or alternatively, to an auxiliary I/O device 738 or the USB port 730. A user of the wireless device 700 may also compose data items, such as e-mail messages, using the keyboard 722, which is able to include a complete alphanumeric keyboard or a telephone-type keypad, in conjunction with the display 720 and possibly an auxiliary I/O device 738. Such composed items are then able to be transmitted over a communication network through the communication subsystem.

For voice communications, overall operation of the wireless device 700 is substantially similar, except that received signals are generally provided to a speaker 724 and signals for transmission are generally produced by a microphone 726. Alternative voice or audio I/O subsystems, such as a voice message recording subsystem, may also be implemented on the wireless device 700. Although voice or audio signal output is generally accomplished primarily through the speaker 724, the display 720 may also be used to provide an indication of the identity of a calling party, the duration of a voice call, or other voice call related information, for example.

Depending on conditions or statuses of the wireless device 700, one or more particular functions associated with a subsystem circuit may be disabled, or an entire subsystem circuit may be disabled. For example, if the battery temperature is low, then voice functions may be disabled, but data communications, such as e-mail, may still be enabled over the communication subsystem.

A short range/long range wireless communications subsystem 702 is a further optional component which may provide for communication between the wireless device 700 and different systems or devices. However these different systems or devices need not necessarily be similar devices as discussed above. The wireless communications subsystem 702 comprises one or more wireless transceivers, optionally associated circuits and components, and an optional infrared device for communicating over various networks and implementing one or more wireless communication technologies such as, but not limited to, Bluetooth^{®} and/or a wireless fidelity technologies.

A media reader 742 is able to be connected to an auxiliary I/O device 738 to allow, for example, loading computer readable program code of a computer program product into the wireless device 700 for storage into non-volatile memory 716. One example of a media reader 742 is an optical drive such as a CD/DVD drive, which may be used to store data to and read data from a computer readable medium or storage product such as machine readable media (computer readable storage media) 744. Examples of suitable computer readable storage media include optical storage media such as a CD or DVD, magnetic media, or any other suitable data storage device. Media reader 742 is alternatively able to be connected to the wireless device through the USB port 730 or computer readable program code is alternatively able to be provided to the wireless device 700 through the wireless network 703.

Although specific embodiments of the subject matter have been disclosed, those having ordinary skill in the art will understand that changes can be made to the specific embodiments without departing from the spirit and scope of the disclosed subject matter. The scope of the disclosure is not to be restricted, therefore, to the specific embodiments, and it is intended that the appended claims cover any and all such applications, modifications, and embodiments within the scope of the present disclosure.

## Claims

1. A method on a wireless device comprising:
playing streaming media data (112) from a streaming media provider (102) on a wireless device (110);
monitoring (FIG. 3, FIG. 6), during playing the streaming media data (112), at least one characteristic (FIG. 5, FIG. 6) of the streaming media data (112) and the wireless device (110);
determining (FIG. 3, FIG. 6) whether the playing of the streaming media data (112) from the streaming media provider (102) is paused; and
halting (350, FIG. 6), in response to the playing of the media data being paused and based on the characteristic (FIG. 5, FIG. 6) being monitored, a transmission of a keep-alive message to the streaming media provider (102).

2. The method of claim 1, wherein the halting further comprises using the at least one characteristic (FIG. 5, FIG. 6) being monitored as inputs (302, 304, 306, 308) to a supervised learning algorithm (340) and an output of the supervised learning algorithm as a control signal (350) to halt the transmission of a keep-alive message to the streaming media provider (102).

3. The method according to any of claims 1 or 2, wherein the characteristic (FIG. 5, FIG. 6) being monitored includes at least one of a current characteristic and a historic characteristic.

4. The method according to any of claims 1, 2, or 3, wherein the characteristic (FIG. 5, FIG. 6) includes whether the wireless device (110) is coupled to a power charger (502), the method further comprising, in response to the wireless device (110) being coupled to the power charger, continuing the transmission of the keep-alive message to the streaming media provider (102).

5. The method according to any of claims 1, 2, 3, or 4, wherein the characteristic (FIG. 5, FIG. 6) being monitored includes at least one of:
a duration to play the streaming media data (508); and
a volume setting (512).

6. The method according to any of claims 1, 2, 3, 4, or 5, wherein the characteristic (FIG. 5, FIG. 6) being monitored includes at least one of:
a transmission of a text message is detected (514); and
answering of an incoming voice call (516).

7. The method according to any of claims 1, 2, 3, 4, 5, or 6, wherein the characteristic (FIG. 5, FIG. 6) being monitored includes at least one of:
a geographic location of the wireless device (518); and
an orientation of the wireless device (520).

8. The method according to any of claims 1, 2, 3, 4, 5, 6, or 7, wherein the characteristic (FIG. 5, FIG. 6) being monitored includes sensing if the wireless device (110) is in a holster, the method further comprising, in response to the wireless device (110) being coupled to the power charger, halting the transmission of the keep-alive message to the streaming media provider (102).

9. The method of any claims 1, 2, 3, 4, 5, 6, 7, or 8, wherein the streaming media data (112) is streamed with a real time streaming protocol (RTSP) and the message is a keep-alive message.

10. The method according to any of claims s 1, 2, 3, 4, 5, 6, 7, 8, or 9, further comprising:
displaying a message (FIG. 4) on the wireless device (110) indicating playing the streaming media data (112) was halted in response to an expiration of a time period.

11. A wireless device comprising (110):
a memory (716);
a processor communicatively coupled to the memory (714); and
a streaming media power manager communicatively coupled to the memory and the processor, the streaming media power manager for performing a method comprising:
playing streaming media data (112) from a streaming media provider (102) on a wireless device (110);
monitoring (FIG. 3, FIG. 6), during playing the streaming media data (112), at least one characteristic (FIG. 5, FIG. 6) of the streaming media data (112) and the wireless device (110);
determining (FIG. 5, FIG. 6) whether the playing of the streaming media data (112) from the streaming media provider (102) is paused; and
halting (350, FIG. 6), in response to the playing of the media data being paused and based on the characteristic (FIG. 5, FIG. 6) being monitored , a transmission of a keep-alive message to the streaming media provider (102).

12. The wireless device of claim 11, wherein the wherein the halting further comprises using the at least one characteristic (FIG. 5, FIG. 6) being monitored as inputs (302, 304, 306, 308) to a supervised learning algorithm (340) and an output of the supervised learning algorithm (340) as a control signal to halt the transmission of a keep-alive message to the streaming media provider (102).

13. The wireless device according to any of claims 11 or 12, wherein the characteristic (FIG. 5, FIG. 6) being monitored includes at least one of a current characteristic (FIG. 5, FIG. 6) and a historic characteristic (FIG. 5, FIG. 6).

14. The wireless device according to any of claims 11, 12, or 13, wherein the characteristic (FIG. 5, FIG. 6) includes whether the wireless device (110) is coupled to a power charger (502), the wireless device (110) further comprising in response to the wireless device (110) being coupled to the power charger, continuing the transmission of the keep-alive message to the streaming media provider (102).

15. The wireless device according to any of claims 11, wherein the characteristic (FIG. 5, FIG. 6) being monitored includes at least one of:
a duration to play the streaming media data (508); and
a volume setting.

## Amended claims

### Amended claims in accordance with Rule 137(2) EPC.

**1.** A method on a wireless device comprising:
playing streaming media data (112) from a streaming media provider (102) on a wireless device (110);
monitoring (FIG. 3, FIG. 6), during playing the streaming media data (112), at least one characteristic (FIG. 5, FIG. 6) of the streaming media data (112) and the wireless device (110), wherein the characteristic (FIG. 5, FIG. 6) includes whether the wireless device (110) is coupled to a power charger (502);
determining (FIG. 3, FIG. 6) whether the playing of the streaming media data (112) from the streaming media provider (102) is paused; and
halting (350, FIG. 6), in response to the playing of the media data being paused and based on the characteristic (FIG. 5, FIG. 6) being monitored, a transmission of a keep-alive message to the streaming media provider (102).

**2.** The method of claim 1, wherein the halting further comprises using the at least one characteristic (FIG. 5, FIG. 6) being monitored as inputs (302, 304, 306, 308) to a supervised learning algorithm (340) and an output of the supervised learning algorithm as a control signal (350) to halt the transmission of a keep-alive message to the streaming media provider (102).

**3.** The method according to any of the preceding claims, wherein the characteristic (FIG. 5, FIG. 6) being monitored includes at least one of a current characteristic and a historic characteristic.

**4.** The method according to any of the preceding claims, wherein the characteristic (FIG. 5, FIG. 6) being monitored includes at least one of:
a duration to play the streaming media data (508); and
a volume setting (512).

**5.** The method according to any of the preceding claims, wherein the characteristic (FIG. 5, FIG. 6) being monitored includes at least one of:
a transmission of a text message is detected (514); and
answering of an incoming voice call (516).

**6.** The method according to any of the preceding claims, wherein the characteristic (FIG. 5, FIG. 6) being monitored includes at least one of:
a geographic location of the wireless device (518); and
an orientation of the wireless device (520).

**7.** The method according to any of the preceding claims, wherein the characteristic (FIG. 5, FIG. 6) being monitored includes sensing if the wireless device (110) is in a holster, the method further comprising, in response to the wireless device (110) being coupled to the power charger, halting the transmission of the keep-alive message to the streaming media provider (102).

**8.** The method of any of the preceding claims, wherein the streaming media data (112) is streamed with a real time streaming protocol (RTSP) and the message is a keep-alive message.

**9.** The method according to any of the preceding claims, further comprising:
displaying a message (FIG. 4) on the wireless device (110) indicating playing the streaming media data (112) was halted in response to an expiration of a time period.

**10.** A wireless device comprising (110):
a memory (716);
a processor communicatively coupled to the memory (714); and
a streaming media power manager communicatively coupled to the memory and the processor, the streaming media power manager for performing a method comprising:
playing streaming media data (112) from a streaming media provider (102) on a wireless device (110);
monitoring (FIG. 3, FIG. 6), during playing the streaming media data (112), at least one characteristic (FIG. 5, FIG. 6) of the streaming media data (112) and the wireless device (110), wherein the characteristic (FIG. 5, FIG. 6) includes whether the wireless device (110) is coupled to a power charger (502);
determining (FIG. 5, FIG. 6) whether the playing of the streaming media data (112) from the streaming media provider (102) is paused; and
halting (350, FIG. 6), in response to the playing of the media data being paused and based on the characteristic (FIG. 5, FIG. 6) being monitored, a transmission of a keep-alive message to the streaming media provider (102).

**11.** The wireless device of claim 10, wherein the wherein the halting further comprises using the at least one characteristic (FIG. 5, FIG. 6) being monitored as inputs (302, 304, 306, 308) to a supervised learning algorithm (340) and an output of the supervised learning algorithm (340) as a control signal to halt the transmission of a keep-alive message to the streaming media provider (102).

**12.** The wireless device according to any of claims 10 or 11, wherein the characteristic (FIG. 5, FIG. 6) being monitored includes at least one of a current characteristic (FIG. 5, FIG. 6) and a historic characteristic (FIG. 5, FIG. 6).

**13.** The wireless device according to any of claims 10-12, wherein the characteristic (FIG. 5, FIG. 6) being monitored includes at least one of:
a duration to play the streaming media data (508); and
a volume setting.

**14.** The wireless device according to any of claims 10-13, wherein the characteristic (FIG. 5, FIG. 6) being monitored includes at least one of:
a transmission of a text message is detected (514); and
answering of an incoming voice call (516).

**15.** The wireless device according to any of claims 10-14, wherein the characteristic (FIG. 5, FIG. 6) being monitored includes at least one of:
a geographic location of the wireless device (518); and
an orientation of the wireless device (520).
